# EUROPÄISCHE PATENTSCHRIFT

(11) **EP 1 127 977 B1**
(45) Veröffentlichungstag und Bekanntmachung des Hinweises auf die Patenterteilung: **26.03.2008**
(21) Anmeldenummer: 01103141.6
(22) Anmeldetag: 10.02.2001
(51) Int. Cl.: D21G 1/00

(54) **Verfahren zum Betrieb einer Kalanderwalze und Kalanderwalze**
Method for operating a calander roll and calander roll
Procédé de fonctionnement d' un rouleau de calandre et un rouleau de calandre

(30) Priorität: 25.02.2000 DE 10008800
(43) Veröffentlichungstag der Anmeldung: 29.08.2001
(73) Patentinhaber: Voith Patent GmbH, 89522 Heidenheim (DE)
(72) Erfinder: Kayser, Franz, 47608 Geldern (DE); Kläui, Erich, 8472 Seuzach (CH)

(56) Entgegenhaltungen:
- WO-A-99/04181
- DE-A- 19 652 769
- US-A- 3 266 414

## Beschreibung

Die Erfindung betrifft ein Verfahren zum Betrieb einer Kalanderwalze mit einem Walzenmantel, der einen Innenraum umgibt. Ferner betrifft die Erfindung eine Kalanderwalze mit einem Walzenmantel, der einen Innenraum umgibt, in dem mindestens ein auf den Walzenmantel wirkender Aktuator angeordnet ist.

Ein derartiges Verfahren und eine derartige Kalanderwalze sind aus US 3 266 414 A bekannt. Der Walzenmantel ist auf einer undrehbar gehaltenen Achse drehbar gelagert. An der Achse sind Aktuatoren befestigt, die Rollen mit einem Druck beaufschlagen, die an der Innenseite des Walzenmantels anliegen. Durch die Aktuatoren kann ein erhöhter Druck in einem Nip zwischen dieser Kalanderwalze und einer benachbarten Kalanderwalze ausgeübt werden.

Derartige Kalanderwalzen werden vielfach als Mittelwalzen in einem Kalander eingesetzt, bilden also einen Teil eines Walzenstapels. Benachbarte Walzen bilden hierbei Nips, durch die eine Materialbahn geführt wird, um dort mit erhöhtem Druck und gegebenenfalls erhöhter Temperatur beaufschlagt zu werden.

Eine weit verbreitete Anwendung finden derartige Walzen bei der Behandlung einer Papierbahn, die im folgenden als Beispiel zur Erläuterung der Erfindung verwendet werden soll. Die gleiche Problematik ergibt sich aber auch bei anderen Materialbahnen.

In derartigen Kalandern wirken in der Regel sogenannte "weiche" Walzen mit "harten" Walzen zusammen. Vereinzelt wirken auch zwei "weiche" Walzen zusammen. Die weichen Walzen sind hierbei mit einem Kunststoffbelag bezogen. Man hat nun beobachtet, daß nach einer gewissen Betriebszeit derartiger Kalander ein sogenanntes Barring zu beobachten ist. Diese Barring-Erscheinung bewirkt einerseits ein unerwünschtes streifenförmiges Muster auf der Papierbahn. Man kann diese Streifen aber auch als streifenförmige Markierungen an den elastischen Walzen mit den Kunststoffbelägen erkennen. Die weichen Walzen werden sozusagen vieleckig. Ab einer gewissen Stärke oder Intensität führen diese Barrings zu Ausschuß bei der Papierbahn. Die entsprechende Walze oder die entsprechenden Walzen müssen dann überarbeitet werden, um die Verformung des Kunststoffbelages zu beseitigen. In der Regel ist dies mit einem Abdrehen der Walze verbunden.

DE 196 52 769 A1 zeigt ein Verfahren und eine Vorrichtung zur Dämpfung von Kontaktschwingungen zwischen rotierenden Walzen in einer Papiermaschine. Die Walzen sind stirnseitig in Lagerungen gehalten. Mindestens zwei Walzen bilden miteinander einen Nip. Eine Dämpfung erfolgt dadurch, daß eine aktive Anregung von außen auf wenigstens eine Lagerstelle einer der Walzen wirkt.

Eine ähnliche Ausgestaltung ist aus WO 99/04181 bekannt. Hier werden Schwingungen ermittelt, die Walzen in einem Walzenstapel eines Kalanders gegeneinander ausüben. Ein Kraftgenerator, der an einem Ende der Walzen angreift, erzeugt eine entsprechend entgegensetzt gerichtete Beschleunigung der Walze.

Der Erfindung liegt die Aufgabe zugrunde, die Barring-Erscheinung zu vermindern.

Diese Aufgabe wird bei einem Verfahren der eingangs genannten Art dadurch gelöst, daß man im Innenraum eine aktive Schwingung erzeugt, die auf den Walzenmantel wirkt.

Hierbei geht man von folgenden Überlegungen aus:

Ein Walzenstapel, der aus mehreren Walzen gebildet wird, hat eine Vielzahl von Eigenfrequenzen. Bei diesen Eigenfrequenzen gibt es beispielsweise Biegeeigenfrequenzen, die im vorliegenden Fall weniger interessieren, und Eigenschwingungsformen, die sich aus den schwingenden Walzenmassen auf den Feder- und Dämpfersystemen ergeben, die durch die zwischen den Walzen befindlichen Kunststoffbeläge und daneben durch die Walzenlagerungen gebildet sind. Ein laufender Kalander erzeugt nun Erregerkräfte, deren Frequenzen mit den Walzendrehzahlen zusammenhängen und in erster Nährung jeweils vielfachen der Drehfrequenzen entsprechen. Diese Erregerkräfte können viele Ursachen haben, beispielsweise Inhomogenitäten, Anisotropien oder Geometriefehler. Auch können Papierdickenschwankungen der den Kalander durchlaufenden Papierbahn den Walzenstapel erregen. Wenn nun eine dieser Erregerfrequenzen auf eine Eigenfrequenz trifft, so antwortet das Schwingungssystem mit vergrößerten Schwingungsausschlägen. Aufgrund der Vielzahl der möglichen Erreger und der Vielzahl der möglichen Eigenschwingungsformen lassen sich diese Resonanzstellen konstruktiv praktisch nicht umgehen. In der Regel ist das Schwingungssystem auch so stark gedämpft und die Erregerkräfte sind so klein, daß die resultierende Schwingbewegung nicht unmittelbar stört. Erst über einen mehr oder weniger längeren Zeitraum prägen sich diese Schwingungsbewegungen jedoch in die Kunststoffbeläge der elastischen Walze ein. Man kann vielfach beobachten, daß die nächstliegenden ganzzahligen Vielfachen der Schwingungsfrequenz als Muster auf den Walzen eingeprägt werden. Hierdurch erfolgt wiederum eine Rückkopplung der Schwingung. Die Schwingungsausschläge nehmen dann expotentiell zu. Sie äußern sich einerseits in einem erhöhten Schallpegel (bis mehr als 115 dB (A)) und andererseits in periodischen Dickenschwankungen der durchlaufenden Papierbahn, die - wie oben erwähnt - zu Ausschuß führen. Erfindungsgemäß wird nun zur Vermeidung des oben beschriebenen Rückkopplungseffektes der Entstehungsmechanismus der periodischen Belagwelligkeit gestört. Um zu vermeiden, daß sich ein konstantes ganzzahliges Muster mit einer Frequenz nahe der Eigenfrequenz des Systems auf den Walzen einprägt, erzeugt man im Innenraum der Kalanderwalze aktiv eine Schwingung, die auf den Walzenmantel zurückwirkt. Zusätzlich zu den vom Kalander im Betrieb am Walzenmantel zu beobachtenden Schwingungen versetzt man also den Walzenmantel zusätzlich in Schwingungen. Daraus ergibt sich ein Gesamtschwingungsverhalten der einzelnen Walze, bei dem im Idealfall durch die aktive Schwingung, die im Innenraum der Kalanderwalze erzeugt wird, die vom Kalander erregten Schwingungen eliminiert werden. Dies wird in der Praxis vielfach nur mit Schwierigkeiten zu erreichen sein. Oft wird es daher ausreichen, wenn man die aktive Schwingung so steuert, daß die resultierende Schwingung der Kalanderwalze nicht zu einer Barringbildung führt.

Hierbei ist bevorzugt, daß man eine resultierende Schwingung am Walzenmantel ermittelt und die aktive Schwingung in Abhängigkeit von der resultierenden Schwingung steuert. Man erzeugt also die aktive Schwingung in einem Regelkreis, der so ausgebildet ist, daß die resultierende Schwingung möglichst klein ist.

Vorzugsweise verändert man die Frequenz und/oder Phase der aktiven Schwingung im Betrieb. Man kann beispielsweise dafür sorgen, daß die Frequenz und/oder Phase der aktiven Schwingung von Zeit zu Zeit oder kontinuierlich verändert wird. Noch allgemeiner ausgedrückt, kann man die spektralen Anteile der aktiven Schwingung bezüglich ihrer Amplituden, Frequenzen und/oder Phasenlagen im Betrieb verändern. Dies führt dann dazu, daß sich die Oberfläche des Kunststoffbelages wieder umformen muß, so daß die Ausprägung der Barringstreifen oder die Vieleckigkeit verhindert werden kann.

Vorzugsweise ist die aktive Schwingung im wesentlichen in Pressenrichtung der Walze gerichtet. Dies ist die Richtung, aus der nach derzeitigem Kenntnisstand die größte Einflußnahme auf die Barringbildung zu erwarten ist. Wenn die aktive Schwingung der Erregerschwingung dort entgegenwirken kann, ist die Wirkung am größten.

Die Aufgabe wird bei einer Kalanderwalze der eingangs genannten Art dadurch gelöst, daß der Aktuator dem Walzenmantel eine aktive Schwingung aufprägt.

Mit einem derartigen Aktuator kann man dem Walzenmantel eine Schwingung aufprägen. Diese Schwingung ist dann die oben erwähnte "aktive Schwingung". Aus der durch äußere Erregungen hervorgerufene Schwingung und der vom Aktuator hervorgerufenen Schwingung des Walzenmantels ergibt sich dann eine Gesamtschwingung, die durch eine entsprechende Ansteuerung des Aktuators so ausgebildet werden kann, daß eine Barringbildung vermieden oder zumindest verringert werden kann.

Hierbei ist bevorzugt, daß der Aktuator zwischen einer Trägheitsmasse und dem Walzenmantel angeordnet ist. Dies vergrößert die Wirksamkeit des Aktuators. Der Aktuator kann beispielsweise so ausgebildet sein, daß er den Abstand zwischen der Trägheitsmasse und dem Walzenmantel vergrößert oder verkleinert, wozu eine Bewegung der Trägheitsmase erforderlich ist. In diesem Fall entsteht aufgrund der Trägheit der Trägheitsmasse am Walzenmantel eine Reaktionskraft, die zur Erzeugung der aktiven Schwingung verwendet werden kann.

Vorzugsweise sind mehrere Aktuatoren über die axiale Länge des Walzenmantels verteilt. Hierbei trägt man der Tatsache Rechnung, daß viele Walzenmäntel so biegeelastisch sind, daß eine Anregung in der Mitte durch einen dort angeordneten Aktuator nicht unbedingt ausreicht, um die entsprechende aktive Schwingung bis zu den Randbereichen der Walze gelangen zu lassen. Wenn man nun verschiedene Aktuatoren in Axialrichtung verteilt, kann man dafür Sorge tragen, daß die Kalanderwalze über ihre gesamte axiale Länge erregt werden kann. Besonders bevorzugt sind natürlich solche Ausgestaltungen, bei denen alle derartigen Aktuatoren synchron oder zumindest gleichartig betrieben werden.

Vorzugsweise sind mindestens zwei Aktuatoren, die senkrecht zur Walzenachse wirken und die im wesentlichen an der gleichen axialen Position angeordnet sind, zu einer Gruppe zusammengefaßt. Damit erhält man auf einfache Art und Weise die Möglichkeit, die Richtung der Erregung zu beeinflussen. Jeder Aktuator kann unabhängig vom anderen der gleichen Gruppe eine Reaktionskraft auf den Walzenmantel erzeugen. Die Gesamtkraft ergibt sich dann als Resultierende aus den Reaktionskräften.

Hierbei ist besonders bevorzugt, daß die Aktuatoren einer Gruppe rotationssymmetrisch um die Walzenachse herum angeordnet sind. In diesem Fall benötigt man entweder mindestens zwei doppelt wirkende Aktuatoren oder drei einfach wirkende Aktuatoren. Man kann dann im Grunde genommen jede Schwingungsrichtung einstellen, ohne die Symmetrie im Innern der Walze aufzugeben.

Vorzugsweise ist im Walzenmantel eine Sensoranordnung angeordnet, die mit einer Steuereinrichtung in Verbindung steht, die den mindestens einen Aktuator ansteuert. Mit Hilfe der Sensoranordnung kann man die auf den Walzenmantel wirkenden Schwingungen erfassen. Da die Sensoranordnung ebenfalls im Innenraum angeordnet ist, läßt sich die Schwingung auch dann zuverlässig erfassen, wenn die Walze im Betrieb an einer anderen Walze anliegt und gerade in dem Bereich, wo die größten Schwingungen zu erwarten sind, aus diesem Grund außen kein Bauraum für Sensoren zur Verfügung steht. Im Innenraum der Walze ist aber Platz vorhanden, den man für die Unterbringung der Sensoranordnung verwenden kann. Dies hat darüber hinaus den Vorteil, daß die Schwingungen auf die Walze praktisch dort ermittelt werden, wo auch die von den Aktuatoren erzeugten Gegenschwingungen erzeugt werden.

Bevorzugterweise weist die Steuereinrichtung einen Drehzahl- und/oder einen Drehwinkeleingang auf. Damit läßt sich die Drehzahl bzw. der Drehwinkel der Walze bei der Erzeugung der aktiven Schwingungen durch die Aktuatoren berücksichtigen. Dies verbessert das Reaktionsverhalten der Steuereinrichtung.

In einer bevorzugten Ausgestaltung weisen die Aktuatoren Elektromagnete auf. Elektromagnete sind einfach anzusteuern. Sie können bis in relativ hohe Frequenzen von 400 bis 800 Hz betrieben werden und entsprechende Schwingungen am Walzenmantel verursachen.

In einer besonders bevorzugten Ausgestaltung ist vorgesehen, daß der Aktuator mit dem Walzenmantel mitdreht. In diesem Fall hat man eine permanente Kopplung zwischen dem Aktuator und dem Walzenmantel, muß also kein Lager zwischen dem Aktuator und dem Walzenmantel vorsehen. Durch eine entsprechende Ansteuerung des Aktuators oder Aktuatoren kann man auch bei einem mitdrehenden Aktuator dafür sorgen, daß die Schwingung in die gewünschte Richtung gerichtet ist.

Vorzugsweise ist eine elektrische Energieübertragungseinrichtung an einem Ende des Walzenmantels angeordnet. Mit Hilfe der Energieübertragungseinrichtung wird die zum Betrieb der Aktuatoren notwendige Energie von außen in das Innere der Walze übertragen. Die elektrische Energie kann in einem Fall unmittelbar auf die Aktuatoren wirken. Es ist aber auch möglich, hier noch eine elektro-mechanische Umsetzung vorzusehen und die Aktuatoren beispielsweise hydraulisch oder pneumatisch zu betreiben, wenn ein Elektromotor zum Antrieb einer Pumpe im Innern der Walze angeordnet ist. Der Einfachheit halber wird jedoch im folgenden davon ausgegangen, daß die Aktuatoren elektrisch betrieben werden.

Hierbei ist bevorzugt, daß die elektrische Energieübertragungseinrichtung eine Schleifringanordnung aufweist. Eine Schleifringanordnung bildet gleitende Kontakte, über die elektrischer Strom unter einer gewissen Spannung in das Innere der Walze geleitet werden kann. Dies ist eine sehr einfache und auch bewährte Ausführungsform.

In einer alternativen Ausgestaltung kann die elektrische Energieübertragungseinrichtung eine induktive Kopplung aufweisen. Es handelt sich also um einen Transformator mit einem stationären Teil und einem mit der Walze mitrotierenden Teil. Auch durch eine derartige induktive Übertragung läßt sich die elektrische Energie in das Innere der Walze bringen. Hierbei ist zu berücksichtigen, daß der Energiebedarf für die Aktuatoren nicht übermäßig groß ist. Er liegt in der Größenordnung Kilowatt, daß schon relativ kompakte Schleifring- oder Transformatoranordnungen ausreichen, um genügend elektrische Leistung zu übertragen.

Vorzugsweise ist zwischen der Energieübertragungseinrichtung und einer Energieversorgungseinrichtung eine Modulationseinrichtung angeordnet, die ein Signal in die übertragene elektrische Energie einspeist. Mit Modulation ist hier gemeint, daß der Strom oder die Spannung, die in das Innere der Walze übertragen wird, mit einer Information versehen wird, mit deren Hilfe die Aktuatoren angesteuert werden. Diese Modulation kann auf vielerlei Weise erfolgen. Man kann beispielsweise einen Multiplexer verwenden, der in aufeinander folgenden Zeitabschnitten Signale und Leistung überträgt. Es ist auch möglich, ein entsprechend höher frequentes Signal nach Art einer Trägerfrequenzmodulation auf die elektrische Leistung "aufzusetzen", wenn diese mit Hilfe eines Gleichstroms oder mit Hilfe eines niederfrequenten Wechselstromes übertragen wird.

In einer alternativen Ausgestaltung kann vorgesehen sein, daß ein Generator im Walzenmantel vorgesehen ist, der durch Rotation der Walze angetrieben ist. Bei diesem Generator kann es sich um einen elektrischen Generator oder um eine hydraulische oder pneumatische Pumpe handeln. In diesem Fall ist zwar eine geringfügig erhöhte Antriebsleistung für die Walze erforderlich. Man erhält die zum Antrieb der Aktuatoren benötigte Energie aber ohne zusätzliche Energieübertragungseinrichtung von außen nach innen.

Vorzugsweise weist der Walzenmantel im Bereich eines jeden Aktuators eine käfigähnliche Stützstruktur auf. Der Aktuator muß also nicht mehr unmittelbar auf den Walzenmantel wirken, wo er sich gegebenenfalls einer gekrümmten oder konkaven Fläche gegenübersieht. Er kann auf die Stützstruktur wirken, die ihrerseits die Reaktionskräfte auf den Walzenmantel überträgt.

Die Erfindung wird im folgenden anhand von bevorzugten Ausführungsbeispielen in Verbindung mit der Zeichnung näher beschrieben. Hierin zeigen:
- Fig. 1: einen Längsschnitt durch eine erste Ausführungsform einer Walze,
- Fig. 2: einen Querschnitt durch eine abgewandelte Ausführungsform einer Walze und
- Fig. 3: eine schematische Schaltungsanordnung zur Erläuterung des Betriebs der Walze.

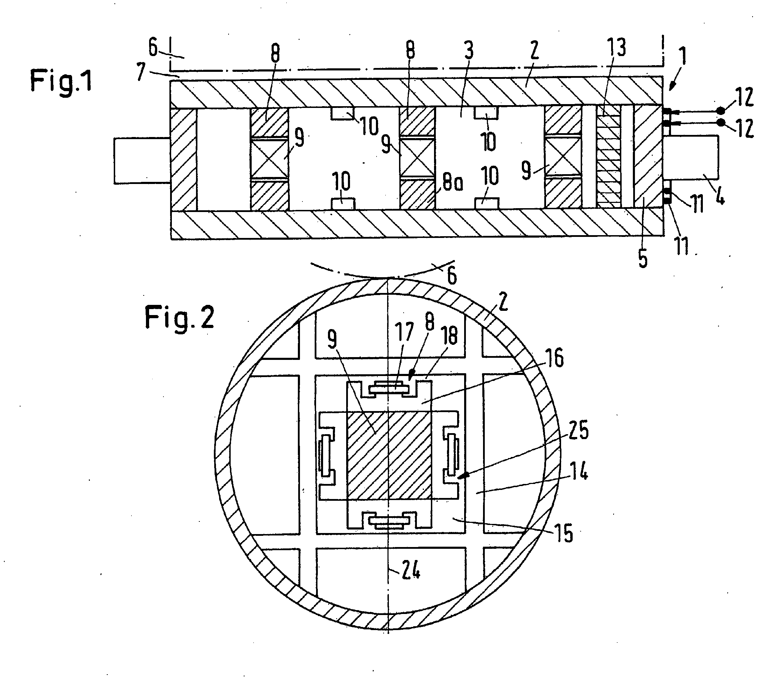

Fig. 1 zeigt einen Längsschnitt durch eine Kalanderwalze 1 mit einem Walzenmantel 2, der einen Innenraum 3 umgibt. Die Kalanderwalze 1 weist ferner Walzenzapfen 4 auf, die mit Zapfenscheiben 5 verbunden sind, die den Innenraum 3 stirnseitig abschließen. Das Vorhandensein der Walzenzapfen 4 und der Zapfenscheiben 5 ist jedoch nicht unbedingt erforderlich.

Im Betrieb arbeitet die Kalanderwalze 1 mit mindestens einer strichpunktiert dargestellten Gegenwalze 6 zusammen. Zwischen der Kalanderwalze 1 und der Gegenwalze 6 ist ein Nip 7 ausgebildet, durch den eine Materialbahn, beispielsweise eine Papierbahn, geführt werden kann, um mit erhöhtem Druck und gegebenenfalls auch mit erhöhter Temperatur beaufschlagt werden zu können. Gegebenenfalls ist die Gegenwalze 6 hierbei beheizt.

In nicht näher dargestellter Weise kann der Walzenmantel 2 auf seiner äußeren Umfangsfläche noch einen Kunststoffbelag aufweisen, so daß die Kalanderwalze 1 als elastische oder "weiche" Walze ausgebildet ist.

Wenn die Kalanderwalze 1 mit der Gegenwalze 6 im Betrieb zusammenwirkt, um eine nicht näher dargestellte Materialbahn zu satinieren, dann liegen die Achsen der beiden Walzen in einer sogenannten Pressenebene 24 (Fig. 2), die im vorliegenden Ausführungsbeispiel der Fig. 1 mit der Zeichenebene übereinstimmt.

Im Innenraum 3 sind in Axialrichtung gleichmäßig verteilt mehrere Aktuatoren 8 angeordnet. Die Aktuatoren sind bei dem Ausführungsbeispiel der Fig. 1 längenveränderlich. Sie sind mit einem Ende am Walzenmantel 2 befestigt. Am anderen Ende sind sie mit einer Trägheitsmasse 9 verbunden. Wenn also ein Aktuator 8 betätigt wird, dann erfolgt eine Verkürzung oder eine Verlängerung des Abstandes zwischen der Trägheitsmasse 9 und dem Walzenmantel 2. Da zur Verlagerung der Trägheitsmasse 9 eine gewisse Kraft erforderlich ist, wirkt eine entsprechende Gegen- oder Reaktionskraft auf den Walzenmantel 2 zurück.

Durch ein periodisches Betätigen der Aktuatoren 8 ist es damit möglich, den Walzenmantel 2 vom Innenraum her in Schwingungen zu versetzen.

Im Innenraum 3 sind ferner Sensoren 10 angeordnet, die die Schwingungen des Walzenmantels 2 ermitteln. Mit einer in Fig. 1 und 2 nicht näher dargestellten Steuereinrichtung kann man die Aktuatoren 8 nun so ansteuern, daß die von den Sensoren 10 ermittelten Schwingungen möglichst klein gehalten werden oder sogar verschwinden. Wenn der Walzenmantel 2 nicht mehr schwingt, dann ist die Gefahr einer Barringbildung drastisch verkleinert worden.

In manchen Fällen wird es nur schwierig möglich sein, ein Schwingen des Walzenmantels 2 vollständig zu verhindern. In diesem Fall kann man alternativ zu der Auslöschung der Schwingungen vorsehen, daß man die Frequenz, mit der die Aktuatoren betätigt werden (hierbei handelt es sich durchaus um Frequenzen zwischen 100 und 1000 Hz) im Betrieb in Abständen oder kontinuierlich variiert, so daß die resultierende Schwingung des Walzenmantels 2 nicht lange genug auf einer Frequenz verharrt, um eine Barringbildung zu erlauben.

Bei den Aktuatoren kann es sich um Elektromagneten handeln. Die Elektromagneten werden über zwei Schleifringe 11 mit elektrischem Strom unter einer vorbestimmten Spannung versorgt. Die Schleifringe können hierbei an einer Stirnseite der Kalanderwalze 1 angeordnet sein. Sie werden über Kontakte 12 gespeist. Im Innenraum 3 des Walzenmantels 2 kann ferner noch ein Leistungsverstärker 13, gegebenenfalls mit einer Steuereinrichtung, angeordnet sein, der dann letztendlich die Aktuatoren 8 in der gewünschten Art und Weise ansteuert.

Anstelle der Schleifringe kann auch ein rotierender Transformator vorgesehen sein, bei dem die elektrische Leistung auf induktivem Weg übertragen wird. Schließlich ist es auch möglich, an dem Walzenmantel 2 oder an den Zapfenscheiben 5 einen elektrischen Generator oder eine Pumpe für Luft oder eine Hydraulikflüssigkeit anzuordnen, die durch die Rotation der Kalanderwalze 1 angetrieben werden.

Man kann die Aktuatoren, wie dargestellt, in der Zeichenebene wirken lassen. Wenn sich die Aktuatoren mitdrehen, wenn die Aktuatoren also mit dem Walzenmantel 2 verbunden sind, kann man sie beispielsweise so ansteuern, daß sie eine Verlagerung der Trägheitsmassen 9 immer nur dann durchführen, wenn die Bewegungsrichtung der Trägheitsmasse in der Pressenebene liegt. Man kann auch zusätzlich senkrecht zur Zeichenebene wirkende Aktuatoren verwenden, so daß die Trägheitsmasse entsprechend öfters bewegt werden kann, um Gegenschwingungen zu erzeugen.

In einer alternativen Ausgestaltung kommt man mit der dargestellten Aktuatoren-Anordnung aus, bei der man zweiseitig wirkende Aktuatoren 8, 8a in der Pressenebene hat, wenn die Aktuatoren nicht mitdrehen. In diesem Fall wird die Schwingung des Walzenmantels im enfachsten Fall allerdings immer nur durch Druckbewegungen der Aktuatoren (Vergrößerung des jeweils aktiven Aktuators unter Abstossung der Trägheitsmasse 9) wirksam. In einer alternativen Ausgestaltung können die Aktuatoren auch Zugkräfte erzeugen, beispielsweise magnetisch am Walzenmantel. In diesem Fall gleitet der Walzenmantel 2 auf den Aktuatoren 8, 8a und mit nicht näher dargestellten Mitteln sind die Aktuatoren 8, 8a relativ zu einem raumfesten Punkt, beispielsweise einem nicht näher dargestellten Ständer festgehalten. Ein Ständer ist allerdings nicht unbedingt erforderlich, wenn andere Mittel vorgesehen sind. So können die Aktuatoren 8, 8a mit Hilfe eines Schwerkraftpendels oder einem gegenläufig zur Walze drehenden Drehfeld "festgehalten" werden.

Fig. 2 zeigt eine abgewandelte Ausführungsform, bei der gleiche Teile mit gleichen Bezugszeichen versehen sind.

In den Walzenmantel 2, der mit der Gegenwalze 6 zusammenwirkt, ist eine käfigähnliche Stützstruktur 14 eingesetzt, die aus vier Platten gebildet ist, die ein zentrisch angeordnetes Quadrat 15 bilden und sich im übrigen an der Innenwand des Walzenmantels 2 abstützen. In der Mitte des Quadrats 15 ist die Trägheitsmasse 9 angeordnet, auf der vier Aktuatoren 8 angeordnet sind, die als Elektromagnete ausgebildet sind. Jeder Elektromagnet weist ein E-förmiges Joch 16 auf, um dessen mittleren Finger eine Spule 17 gelegt ist. Die Schenkel des Jochs bilden zusammen mit der Käfiganordnung 14 Luftspalte 18. Wenn die Spule 17 mit Strom versorgt wird, dann zieht der Elektromagnet die Trägheitsmasse 9 näher an die entsprechende Seite der Käfiganordnung 14 heran oder er stößt sie entsprechend ab. Auch auf diese Weise läßt sich dem Walzenmantel 2 eine Schwingung vermitteln.

Wenn man die einzelnen Aktuatoren gemeinsam ansteuert, dann läßt sich die Richtung der resultierenden Kraft verändern. Wenn man beispielsweise den in Fig. 2 nach oben weisenden und den in Fig. 2 nach rechts weisenden Aktuator gleichzeitig und mit gleicher Intensität ansteuert, dann ergibt sich eine Kraft, die unter einem Winkel von 45° auf den Walzenmantel 2 wirkt. Wenn man die Aktuatoren phasenversetzt ansteuert, dann kann man einen Kraftvektor erzeugen, der relativ zum Walzenmantel 2 rotiert. Im vorliegenden Ausführungsbeispiel mit vier in Umfangsrichtung gleichmäßig verteilten Aktuatoren 8, die zu einer Aktuatorengruppe zusammengefaßt sind, läßt sich eine derartige rotierende Krafterzeugung, beispielsweise dadurch erzielen, daß man die einzelnen Aktuatoren mit sinusförmigen Wechselströmen beaufschlagt, die jeweils 90° elektrisch zueinander versetzt sind.

Diesen Effekt kann man vorteilhafterweise dann ausnutzen, wenn sich der Walzenmantel 2 dreht. Durch eine entsprechende Ansteuerung der Aktuatoren kann man nämlich dafür sorgen, daß der resultierende Kraftvektor immer in der Pressenebene bleibt.

Natürlich können auch bei der Ausgestaltung nach Fig. 2 die entsprechenden Schwingungssensoren vorhanden sein.

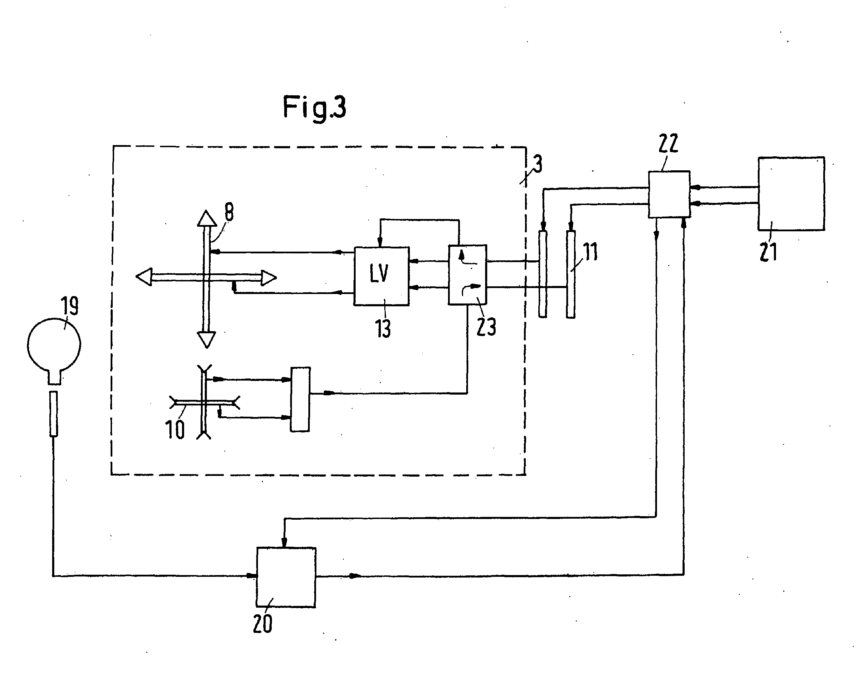

Fig. 3 zeigt schematisch in Form eines Schaltplanes, wie die Aktuatoren 8 angesteuert werden. Die Aktuatoren sind hier in Form von Doppelpfeilen dargestellt. Der Innenraum 3 ist durch eine gestrichelte Linie umgrenzt.

Die Kalanderwalze 1 ist mit einem Tachogenerator 19 versehen, der eine Information über die Drehzahl erzeugt. In einem Signalprozessor 20 kann man daraus gegebenenfalls auch eine Information über den jeweiligen Drehwinkel der Walze gewinnen.

Eine Stromversorgungseinrichtung 21 speist über die Schleifringe 11 den Leistungsverstärker 13, der seinerseits wiederum die Aktuatoren 8 ansteuert.

Zwischen der Stromversorgungseinrichtung 21 und den Schleifringen 11 ist eine Modulationseinrichtung angeordnet, die im vorliegenden Fall als Multiplexer/Demultiplexer ausgebildet ist. Die Modulationseinrichtung 22 prägt die von dem Prozessor 20 kommenden Signale auf den an die Schleifringe 11 übertragenen Strom ein. Eine entsprechende Demodulationseinrichtung 23 ist im Innenraum 3 angeordnet. Die Demodulationseinrichtung 23 ist ebenfalls als Multiplexer/Demultiplexer ausgebildet. Sie ist auch in der Lage, von der Sensoranordnung 10 stammende Signale über den Multiplexer 22 an den Prozessor 20 zu liefern.

Natürlich sind auch andere, vorzugsweise kontaktfreie Übertragungsarten möglich, beispielsweise Infrarot, Hochfrequenz etc.

Damit ist der Prozessor 20 in der Lage, die Aktuatoren 8 so anzusteuern, daß die Schwingungen des Walzenmantels 2 entweder nahezu eliminiert werden oder sich die Schwingungen des Walzenmantels 2 nicht lange genug in einem Frequenzbereich befinden, um eine Barringbildung zuzulassen.

## Patentansprüche

1. Verfahren zum Betrieb einer Kalanderwalze mit einem Walzenmantel (2), der einen Innenraum (3) umgibt, **dadurch gekennzeichnet, daß** man im Innenraum (3) eine aktive Schwingung erzeugt, die auf den Walzenmantel (2) wirkt.

2. Verfahren nach Anspruch 1, **dadurch gekennzeichnet, daß** man eine resultierende Schwingung am Walzenmantel (2) ermittelt und die aktive Schwingung in Abhängigkeit von der resultierenden Schwingung steuert.

3. Verfahren nach Anspruch 1 oder 2, **dadurch gekennzeichnet, daß** man die Frequenz und/oder Phase der aktiven Schwingung im Betrieb verändert.

4. Verfahren nach einem der Ansprüche 1 bis 3, **dadurch gekennzeichnet, daß** die aktive Schwingung im wesentlichen in Pressenrichtung der Walze gerichtet ist.

5. Kalanderwalze mit einem Walzenmantel (2), der einen Innenraum (3) umgibt, in dem mindestens ein auf den Walzenmantel (2) wirkender Aktuator (8) angeordnet ist, **dadurch gekennzeichnet, daß** der Aktuator (8) dem Walzenmantel eine aktive Schwingung aufprägt.

6. Kalanderwalze nach Anspruch 5, **dadurch gekennzeichnet, daß** der Aktuator (8) zwischen einer Trägheitsmasse (9) und dem Walzenmantel (2) angeordnet ist.

7. Kalanderwalze nach Anspruch 5 oder 6, **dadurch gekennzeichnet, daß** mehrere Aktuatoren (8) über die axiale Länge des Walzenmantels (2) verteilt sind.

8. Kalanderwalze nach einem der Ansprüche 5 bis 7, **dadurch gekennzeichnet, daß** mindestens zwei Aktuatoren (8, 25), die senkrecht zur Walzenachse wirken und die im wesentlichen an der gleichen axialen Position angeordnet sind, zu einer Gruppe zusammengefaßt sind.

9. Kalanderwalze nach Anspruch 8, **dadurch gekennzeichnet, daß** die Aktuatoren (8, 25) einer Gruppe rotationssymmetrisch um die Walzenachse herum angeordnet sind.

10. Kalanderwalze nach einem der Ansprüche 5 bis 9, **dadurch gekennzeichnet, daß** im Walzenmantel (2) eine Sensoranordnung (10) angeordnet ist, die mit einer Steuereinrichtung (20) in Verbindung steht, die den mindestens einen Aktuator (8, 25) ansteuert.

11. Kalanderwalze nach Anspruch 10, **dadurch gekennzeichnet, daß** die Steuereinrichtung (20) einen Drehzahl- und/oder einen Drehwinkeleingang aufweist.

12. Kalanderwalze nach einem der Ansprüche 5 bis 11, **dadurch gekennzeichnet, daß** die Aktuatoren (8, 25) Elektromagnete aufweisen.

13. Kalanderwalze nach einem der Ansprüche 5 bis 12, **dadurch gekennzeichnet, daß** der Aktuator (8) mit dem Walzenmantel mitdreht.

14. Kalanderwalze nach einem der Ansprüche 5 bis 13, **dadurch gekennzeichnet, daß** eine elektrische Energieübertragungseinrichtung (11) an einem Ende des Walzenmantels (2) angeordnet ist.

15. Kalanderwalze nach Anspruch 14, **dadurch gekennzeichnet, daß** die elektrische Energieübertragungseinrichtung eine Schleifringanordnung (11) aufweist.

16. Kalanderwalze nach Anspruch 14, **dadurch gekennzeichnet, daß** die elektrische Energieübertragungseinrichtung eine induktive Kopplung aufweist.

17. Kalanderwalze nach einem der Ansprüche 5 bis 13, **dadurch gekennzeichnet, daß** zwischen der Energieübertragungseinrichtung und einer Energieversorgungseinrichtung eine Modulationseinrichtung (22) angeordnet ist, die ein Signal in die übertragene elektrische Energie einspeist.

18. Kalanderwalze nach einem der Ansprüche 5 bis 13, **dadurch gekennzeichnet, daß** ein Generator im Walzenmantel (2) vorgesehen ist, der durch Rotation der Walze angetrieben ist.

19. Kalanderwalze nach einem der Ansprüche 5 bis 18, **dadurch gekennzeichnet, daß** der Walzenmantel (2) im Bereich eines jeden Aktuators (8, 25) eine Käfigstruktur (14) aufweist.

## Claims

1. Method for operating a calender roll having a roll shell (2) which surrounds an internal space (3), **characterized in that** an active oscillation, which acts on the roll shell (2), is generated in the internal space (3).

2. Method according to Claim 1, **characterized in that** the resultant oscillation at the roll shell (2) is determined and the active oscillation is controlled as a function of the resultant oscillation.

3. Method according to Claim 1 or 2, **characterized in that** the frequency and/or phase of the active oscillation is changed during operation.

4. Method according to one of Claims 1 to 3, **characterized in that** the active oscillation is oriented substantially in the pressing direction of the roll.

5. Calender roll having a roll shell (2) which surrounds an internal space (3) in which there is arranged at least one actuator (8) acting on the roll shell (2), **characterized in that** the actuator (8) imparts an active oscillation to the roll shell.

6. Calender roll according to Claim 5, **characterized in that** the actuator (8) is arranged between an inertial mass (9) and the roll shell (2).

7. Calender roll according to Claim 5 or 6, **characterized in that** a plurality of actuators (8) are distributed over the axial length of the roll shell (2).

8. Calender roll according to one of Claims 5 to 7, **characterized in that** at least two actuators (8, 25) which act at a right angle to the roll axis and which are arranged substantially at the same axial position are combined into a group.

9. Calender roll according to Claim 8, **characterized in that** the actuators (8, 25) of a group are arranged rotationally symmetrically around the roll axis.

10. Calender roll according to one of Claims 5 to 9, **characterized in that** in the roll shell (2) there is arranged a sensor arrangement (10) which is connected to a control device (20) which drives the at least one actuator (8, 25).

11. Calender roll according to Claim 10, **characterized in that** the control device (20) has a rotational speed input and/or a rotational angle input.

12. Calender roll according to one of Claims 5 to 11, **characterized in that** the actuators (8, 25) have electromagnets.

13. Calender roll according to one of Claims 5 to 12, **characterized in that** the actuator (8) corotates with the roll shell.

14. Calender roll according to one of Claims 5 to 13, **characterized in that** an electrical energy transmission device (11) is arranged at one end of the roll shell (2).

15. Calender roll according to Claim 14, **characterized in that** the electrical energy transmission device has a slip ring arrangement (11).

16. Calender roll according to Claim 14, **characterized in that** the electrical energy transmission device has inductive coupling.

17. Calender roll according to one of Claims 5 to 13, **characterized in that** between the energy transmission device and an energy supply device there is arranged a modulation device (22) which feeds a signal into the electrical energy transmitted.

18. Calender roll according to one of Claims 5 to 13, **characterized in that** a generator, which is driven by rotation of the roll, is provided in the roll shell (2).

19. Calender roll according to one of Claims 5 to 18, **characterized in that** the roll shell (2) has a cage structure (14) in the region of each actuator (8, 25).

## Revendications

1. Procédé pour faire fonctionner un rouleau de calandre, comprenant une enveloppe de rouleau (2) qui entoure un espace interne (3), **caractérisé en ce que** l'on produit dans l'espace interne (3) une oscillation active qui agit sur l'enveloppe de rouleau (2).

2. Procédé selon la revendication 1, **caractérisé en ce que** l'on détermine une oscillation résultante sur l'enveloppe de rouleau (2) et l'on commande l'oscillation active en fonction de l'oscillation résultante.

3. Procédé selon la revendication 1 ou 2, **caractérisé en ce que** l'on modifie la fréquence et/ou la phase de l'oscillation active pendant le fonctionnement.

4. Procédé selon l'une quelconque des revendications 1 à 3, **caractérisé en ce que** l'oscillation active est sensiblement orientée dans la direction de pressage du rouleau.

5. Rouleau de calandre comprenant une enveloppe de rouleau (2) qui entoure un espace interne (3), dans lequel est disposé au moins un actionneur (8) agissant sur l'enveloppe de rouleau (2), **caractérisé en ce que** l'actionneur (8) confère à l'enveloppe de rouleau une oscillation active.

6. Rouleau de calandre selon la revendication 5, **caractérisé en ce que** l'actionneur (8) est disposé entre une masse d'inertie (9) et l'enveloppe de rouleau (2).

7. Rouleau de calandre selon la revendication 5 ou 6, **caractérisé en ce que** plusieurs actionneurs (8) sont répartis sur la longueur axiale de l'enveloppe de rouleau (2).

8. Rouleau de calandre selon l'une quelconque des revendications 5 à 7, **caractérisé en ce qu'**au moins deux actionneurs (8, 25) qui agissent perpendiculairement à l'axe du rouleau et qui sont disposés sensiblement à la même position axiale, sont réunis pour former un groupe.

9. Rouleau de calandre selon la revendication 8, **caractérisé en ce que** les actionneurs (8, 25) d'un groupe sont disposés suivant une symétrie de révolution autour de l'axe du rouleau.

10. Rouleau de calandre selon l'une quelconque des revendications 5 à 9, **caractérisé en ce qu'**un agencement de capteurs (10) est disposé dans l'enveloppe du rouleau (2), lequel agencement est connecté à un dispositif de commande (20) qui commande l'au moins un actionneur (8, 25).

11. Rouleau de calandre selon la revendication 10, **caractérisé en ce que** le dispositif de commande (20) présente une entrée pour la vitesse de rotation et/ou l'angle de rotation.

12. Rouleau de calandre selon l'une quelconque des revendications 5 à 11, **caractérisé en ce que** les actionneurs (8, 25) présentent des électroaimants.

13. Rouleau de calandre selon l'une quelconque des revendications 5 à 12, **caractérisé en ce que** l'actionneur (8) tourne conjointement avec l'enveloppe de rouleau.

14. Rouleau de calandre selon l'une quelconque des revendications 5 à 13, **caractérisé en ce qu'**un dispositif de transfert d'énergie électrique (11) est disposé à une extrémité de l'enveloppe de rouleau (2).

15. Rouleau de calandre selon la revendication 14, **caractérisé en ce que** le dispositif de transfert d'énergie électrique présente un agencement de bagues collectrices (11).

16. Rouleau de calandre selon la revendication 14, **caractérisé en ce que** le dispositif de transfert d'énergie électrique présente un couplage inductif.

17. Rouleau de calandre selon l'une quelconque des revendications 5 à 13, **caractérisé en ce qu'**un dispositif de modulation (22) est disposé entre le dispositif de transfert d'énergie électrique et un dispositif d'alimentation en énergie, et injecte un signal dans l'énergie électrique transmise.

18. Rouleau de calandre selon l'une quelconque des revendications 5 à 13, **caractérisé en ce qu'**un générateur est prévu dans l'enveloppe de rouleau (2), lequel est entraîné par la rotation du rouleau.

19. Rouleau de calandre selon l'une quelconque des revendications 5 à 18, **caractérisé en ce que** l'enveloppe de rouleau (2) présente une structure en forme de cage (14) dans la région de chaque actionneur (8, 25).
